# EUROPÄISCHE PATENTSCHRIFT

(11) **EP 0 591 790 B1**
(45) Veröffentlichungstag und Bekanntmachung des Hinweises auf die Patenterteilung: **18.03.1998**
(21) Anmeldenummer: 93115463.7
(22) Anmeldetag: 24.09.1993
(51) Int. Cl.: C10B 53/00, F23N 1/06

(54) **Schwel-Brenn-Verfahren sowie Schwel-Brenn-Anlage mit Drucksteuerung**
Carbonization-combustion-process and plant with pressure control
Procédé et dispositif de carbonisation-combustion à commande de pression

(30) Priorität: 09.10.1992 DE 4234163
(43) Veröffentlichungstag der Anmeldung: 13.04.1994
(73) Patentinhaber: SIEMENS AKTIENGESELLSCHAFT, 80333 München (DE)
(72) Erfinder: May, Karl, D-61118 Bad-Vilbel (DE); Mattke, Reinhard, Dipl.-Ing., D-63179 Obertshausen (DE); Herm, Hartmut, Dipl.-Ing., D-63303 Dreieich (DE)

(56) Entgegenhaltungen:
- EP-A- 0 302 310
- WO-A-88/01198
- DE-A- 3 733 078
- FR-A- 2 277 137
- PATENT ABSTRACTS OF JAPAN vol. 14, no. 221 (M-971)(4164) 10. Mai 1990 & JP-A-02 052 926 (TOTO) 22. Februar 1990

## Beschreibung

Die Erfindung bezieht sich auf ein Schwel-Brenn-Verfahren, bei dem das von einer Pyrolysetrommel erzeugte Schwelgas In den Brenner einer Brennkammer geleitet und das dort infolge Verbrennung entstehende Rauchgas über eine Kühleinrichtung und über einen Gasverdichter einem Auslaß zugeführt wird, wobei mittels des Gasverdichters der Druck im Gasweg zwischen der Pyrolysetrommel und dem Gasverdichter beeinflußt wird. Die Erfindung bezieht sich weiter auf eine Schwel-Brenn-Anlage, die nach diesem Verfahren arbeitet. Das Verfahren und die Anlage werden zur thermischen Abfallentsorgung eingesetzt.

Auf dem Gebiet der Abfallbeseitigung ist das sogenannte Schwel-Brenn-Verfahren bekannt geworden. Das Verfahren und eine danach arbeitende Anlage zur thermischen Abfallentsorgung sind beispielsweise in der EP-A-0 302 310 sowie in der DE-A-38 30 153 beschrieben. Die Anlage zur thermischen Abfallentsorgung nach dem Schwel-Brenn-Verfahren enthält als wesentliche Komponenten einen Pyrolysereaktor und eine Hochtemperatur-Brennkammer. Der Pyrolysereaktor setzt den aufgegebenen Abfall in Schwelgas und Pyrolysereststoff um. Das Schwelgas und der Pyrolysereststoff werden sodann nach geeigneter Aufbearbeitung dem Brenner der Hochtemperatur-Brennkammer zugefühzt. Hier entsteht schmelzflüssige Schlacke, die über einen Abzug entnehmbar ist und die nach Abkühlung in verglaster Form vorliegt. Das entstehende Rauchgas wird über eine Rauchgasleitung einem Kamin als Auslaß zugeführt. In diese Rauchgasleitung sind insbesondere ein Abhitzedampferzeuger als Kühleinrichtung, eine Staubfilteranlage und eine Rauchgasreinigungsanlage eingebaut. Weiterhin befindet sich in der Rauchgasleitung ein Gasverdichter, der direkt am Ausgang der Rauchgasreinigungsanlage angeordnet und als Saugzuggebläse ausgebildet sein kann. Der eingebaute Gasverdichter dient zur Aufrechterhaltung eines - wenn auch geringen - Unterdruckes in der Pyrolysetrommel. Durch diesen Unterdruck wird verhindert, daß Schwelgas durch die Ringdichtungen der Pyrolysetrommel nach außen in die Umgebung austritt.

Aus der DE 37 33 078 A1 ist eine Anlage zur thermischen Abfallbeseitigung bekannt, die einen Pyrolysereaktor mit einer Austragsvorrichtung für einen Pyrolysereststoff umfaßt. An der Austragsvorrichtung ist eine Schwelgasabzugsvorrichtung angeschlossen, die gewährleisten soll, daß beim Betrieb keine Schwelgase in die Atmosphäre abgegeben werden können. Hierzu wird der Druck in dem Pyrolysereaktor auf einen vorgegebenen Unterdruck gehalten.

Es hat sich gezeigt, daß bei einer Schwel-Brenn-Anlage der Gasverdichter oder das Saugzuggebläse kaum mit konstanter Drehzahl laufen darf, da infolge variierender Gasproduktion ein schwankender Druck im Gasweg zwischen der Pyrolysetrommel und dem Gasverdichter entsteht. Ein solch unstetiges Verhalten des Gasdruckes ist unerwünscht, da es unter Umständen - wenn auch nur kurzzeitig - zu einem Überschreiten des Umgebungsdruckes und damit zum Austritt von Rauchgas oder aber zu einem zu starken Unterdruck im besagten Rauchgasweg fuhren konnte.

Aufgabe der Erfindung ist es, bei dem eingangs genannten Schwel-Brenn-Verfahren und bei der eingangs genannten Schwel-Brenn-Anlage Maßnahmen anzugeben, die eine Kontrolle des Druckes ermöglichen, auch wenn die Gasproduktion in der Schweltrommel schwankt.

Bezüglich des eingangs genannten Verfahrens wird diese Aufgabe erfindungsgemäß dadurch gelöst, daß bei einem Druck im besagten Gasweg, der niedriger als der Druck in der Umgebung ist, die Drehzahl des Gasverdichters in Abhängigkeit vom Druck im Gasweg so geführt ist, daß bei einer verringerung des Druckes die Drehzahl verringert wird, wobei parallel, bevorzugt aber in Reihe zum Gasverdichter ein weiterer Gasverdichter angeordnet ist, und wobei die Drehzahl des weiteren Gasverdichters - unabhängig von der Drehzahl des erstgenannten Gasverdichters - in Abhängigkeit vom Druck im besagten Gasweg so geführt ist, daß bei einer Verringerung des Drucks die Drehzahl verringert wird.

Die Erfindung basiert somit auf der Überlegung, daß zumindest in einem Druckbereich, in dem der Druck im Gasweg niedriger als der Druck in der Umgebung ist, eine große Gasproduktion in der Schweltrommel durch eine hohe Drehzahl, eine geringe Gasproduktion - die bis zur Menge Null gehen kann - dagegen durch eine kleine Drehzahl des Gasverdichters bewältigt werden kann. Die Drehzahl des weiteren Gasverdichters ist dabei in vergleichbarer Weise zu führen. Der weitere Gasverdichter gewährleistet die Bereitstellung einer ausreichend hohen Leistung und erhöht die Störsicherheit, da er eine gewisse Redundanz bietet. Sollte der Druck im besagten Gasweg einmal, zum Beispiel infolge übermäßiger Abfallfeuchte und damit übermäßig erzeugter Schwelgasmenge, über einen Druck ansteigen, der oberhalb eines Maximaldrucks oder sogar oberhalb des Umgebungsdrucks liegt, so können weitere Maßnahmen vorgesehen sein, die im folgenden näher erläutert werden.

Am einfachsten läßt sich eine Kontrolle dadurch erzielen, daß die Drehzahl in Abhängigkeit vom Druck nach einer vorgegebenen Relation geführt wird. Diese Relation kann in Form einer Tabelle oder in Form eines Diagramms vorgegeben sein. Hierbei handelt es sich also um eine druckabhängige Drehzahlsteuerung.

Gemäß einer Weiterbildung des Verfahrens ist ein Druckregelung über die Drehzahl vorgesehen. Diese Weiterbildung zeichnet sich dadurch aus, daß der Druck im besagten Gasweg auf einem vorgegebenen Sollwert gehalten wird, der niedriger ist als der Druck in der Umgebung.

Bevorzugt sind weiterhin Maßnahmen vorgesehen, mit denen er Druck im besagten Gasweg stets unterhalb des Druckes in der Umgebung gehalten wird.

Bei der Steuerung oder Regelung sollte man darauf bedacht sein, den Druck stets unterhalb eines maximalen Grenzwertes zu halten, der etwas unterhalb des Umgebungsdruckes liegen sollte. Dies kann insbesondere dadurch erreicht werden, daß bei Erreichen eines vorgegebenen Maximalwerts des Druckes im besagten Gasweg die jeweilige Drehzahl der Gasverdichter deutlich erhöht wird. Dies führt dazu, daß die zeitabhängige Druck-Drehzahl-Kennlinie ab dem Maximalwert des Druckes eine starke Änderung oder gar einen Knick erfährt.

Aber auch ein zu niedriger Druck kann im Gasweg schädlich sein. Denn die üblichen Komponenten, sollten nicht besonders Kostenaufwendige Maßnahmen getroffen sein, halten nur einen gewissen Unterdruck aus. Um auch hier einen Schutz zu gewährleisten, ist nach einer weiteren Ausbildung vorgesehen, daß bei Erreichen eines vorgegebenen Minimalwerts des Druckes im besagten Gasweg die Drehzahl der Gasverdichter deutlich verringert oder gar auf Null gesetzt wird.

Gelegentlich ergibt sich auch die Notwendigkeit, eine weitere Pyrolysetrommel vorzusehen, beispielsweise weil der Anfall an Albfall oder Müll größer ist oder weil Pyrolysetrommeln nur bis zu einer gewissen Kapazität das erforderliche Genehmigungsverfahren durchlaufen haben. In einem solchen Fall wird dann so vorgegangen, daß das von der weiteren Pyrolysetrommel erzeugte Schwelgas in den Brenner der bereits vorhandenen Brennkammer gegeben wird.

Sind zwei Pyrolysetrommeln und zwei Gasverdichter vorgesehen, so wird man eine redundante Drehzahlsteuerung vorsehen. Diese zeichnet sich dadurch aus, daß die Drehzahl des Gasverdichters und unabhängig davon die Drehzahl des weiteren Gasverdichters jeweils in Abhängigkeit vom Druck in der Pyrolysetrommel und vom Druck in der weiteren Pyrolysetrommel geführt sind.

Die Gasproduktion in den beiden Pyrolystrommeln kann sich mengenmäßig unterscheiden. Aus diesem Grund wird bevorzugt so vorgegangen, daß zur Führung der Drehzahl jeweils der höhere der beiden Drücke in den Pyrolysetrommeln ausgewählt wird. Der höhere Druck führt zu einer höheren Drehzahl und diese wiederum zu einem schnelleren Abbau des Druckes.

Die genannte Aufgabe wird bezüglich der Schwel-Brenn-Anlage erfindungsgemäß dadurch gelöst, daß eine Steuereinrichtung vorgesehen ist, die die Drehzahl des Gasverdichters in Abhängigkeit vom Druck im besagten Gasweg so führt, daß bei einer Verringerung des Druckes die Drehzahl verringert wird, wobei im Gasweg - parallel, vorzugsweise aber in Reihe zum Gasver dichter - ein weiterer Gasverdichter angeordnet ist, und wobei eine weitere Steuereinrichtung vorgesehen ist, die die Drehzahl des weiteren Gasverdichters - unabhängig von der Drehzahl des erstgenannten Gasverdichters - ebenfalls in Abhängigkeit vom Druck im Gasweg so führt, daß bei einer Verringerung des Druckes die Drehzahl des weiteren Gasverdichters verringert wird.

Im einfachsten Fall der Steuerung können die Steuereinrichtungen Mittel umfassen, die eine vorgegebene Relation zwischen zugeführtem Meßwert für den Druck und Stellgröße für die Drehzahl sicherstellen. Diese vorgegebene Relation kann in Form einer Tabelle oder eines Diagramms vorliegen und in den Steuereinrichtungen gespeichert sein.

Im Falle einer Regelung ist den Steuereinrichtungen ein Regler vorgeschaltet, dem neben dem ermittelten Druck-Meßwert auch ein vorgegebener Sollwert für den Druck im Gasweg aufgeschaltet ist. Diese Regelschaltung sorgt dafür, daß - zumindest langfristig - der Druck im Gasweg auf dem vorgegebenen Sollwert festgehalten wird.

Es war bereits zuvor ausgeführt, daß es von Vorteil ist, den Druck im Gasweg stets unterhalb eines maximalen Grenzwerts, der äußerstenfalls gleich dem Umgebungsdruck sein sollte, zu halten. Eine Anlage, die dieses bewerkstelligt, zeichnet sich dadurch aus, daß ein Vergleicher vorgesehen ist, der einen ermittelten Meßwert für den Druck im Gasweg mit einem vorgegebenen Maximalwert vergleicht und der bei Überschreiten des Maximalwerts ein Zusatzsignal an die Steuereinrichtung liefert derart, daß die Drehzahl des Gasverdichters deutlich erhöht wird. Auf diese Weise läßt sich ein Verhalten mit einer scharf abknickenden oder umbiegenden Steuerkennlinie erzeugen.

In analoger Weise kann man vorgehen, wenn es darum geht, das Unterschreiten eines minimalen Grenzwerts für den Druck im Gasweg zu verhindern. Demgemäß ist ein Vergleichsglied vorgesehen, das einen ermittelten Meßwert für den Druck im Gasweg mit einem vorgegebenen Minimalwert vergleicht und das bei Unterschreiten des Minimalwerts ein zusätzliches Eingangssignal an die Steuereinrichtung liefert derart, daß die Drehzahl des jeweiligen Gasverdichters deutlich verringert oder auf Null gesetzt wird.

Wie bereits ausgeführt, kann aus Kapazitäts- oder aus Zulassungsgründen eine weitere Pyrolysetrommel vorgesehen sein. Diese wird bevorzugt an den Brenner der ohnehin vorhandenen Brennkammer angeschlossen, so daß die beiden Pyrolysetrommeln parallel arbeiten.

Um in diesem Fall die Drehzahlsteuerung oder Drehzahlregelung zu bewerkstelligen, kann zur Druckmessung in jeder der beiden Pyrolysetrommeln mindestens ein Druckmesser vorgesehen sein, und zwar vorzugsweise an dem jeweiligen Austrittsgehäuse. Insbesondere kann so vorgegangen werden, daß die Steuereinrichtung und die weitere Steuereinrichtung jeweils eingangsseitig mit einem ersten und zweiten Druckmesser verbunden sind, wobei der erste Druckmesser den Druck in der Pyrolysetrommel und der zweite Druckmesser den Druck in der weiteren Pyrolysetrommel mißt.

Von besonderem Vorteil ist es hierbei, wenn die Steuereinrichtung und die weitere Steuereinrichtung jeweils einen Diskriminator enthält, der den höheren Druckwert zur Führung der betreffenden Drehzahl weiterleitet.

Zwischen dem Gasverdichter und dem weiteren Gasverdichter kann eine Rauchgas-Reinigungsanlage, insbesondere ein DeNOx-Reiniger, geschaltet sein.

Es soll an dieser Stelle noch einmal festgehalten werden. Die voranstehende Drehzahl-Führung durch Steuerung oder Regelung eignet sich für eine Schwel-Brenn-Anlage mit
1. einer einzigen Pyrolysetrommel mit zwei in Serie geschalteten Gasverdichtern,
2. zwei an einer Brennkammer parallel arbeitenden Pyrolysetrommeln mit zwei in Serie geschalteten Gasverdichtern,
3. zwei an einer Brennkammer parallel arbeitenden Pyrolysetrommeln mit zwei im Gasweg parallel geschalteten Gasverdichtern und
4. einer einzigen Pyrolysetrommel mit zwei im Gasweg parallel zueinander angeordneten Gasverdichtern.

Ausfürungsbeispiele der Erfindung werden im folgenden anhand der Zeichnung näher erläutert. Es zeigen:
Figur 1 eine Schwel-Brenn-Anlage zur thermischen Abfallentsorgung, bei der die Drehzahl eines Gebläses in Abhängigkeit vom Druck in der Pyrolysetrommel geführt wird;
Figur 2 einen Ausschnitt aus einer Schwel-Brenn-Anlage, bei der von einer Regelung der Drehzahl Gebrauch gemacht wird;
Figur 3 einen Ausschnitt einer weiteren Schwel-Brenn-Anlage, bei der für das Einhalten eines maximalen Grenzwerts gesorgt ist;
Figur 4 einen Ausschnitt einer anderen Schwel-Brenn-Anlage, bei der ein Schutz gegen Unterschreiten eines minimalen Grenzwerts des Drucks vorgesehen ist;
Figur 5 eine bevorzugte Schwel-Brenn-Anlage mit zwei Pyrolysetrommeln und zwei in Reihe geschalteten Gasverdichtern;
Figur 6 ein Diagramm, in dem der Druck in der jeweiligen Pyrolysetrommel über der Drehzahl eines Gebläses aufgetragen ist; und
Figur 7 eine Tabelle mit Wertebeispielen für die in Figur 5 dargestellte Schwel-Brenn-Anlage.

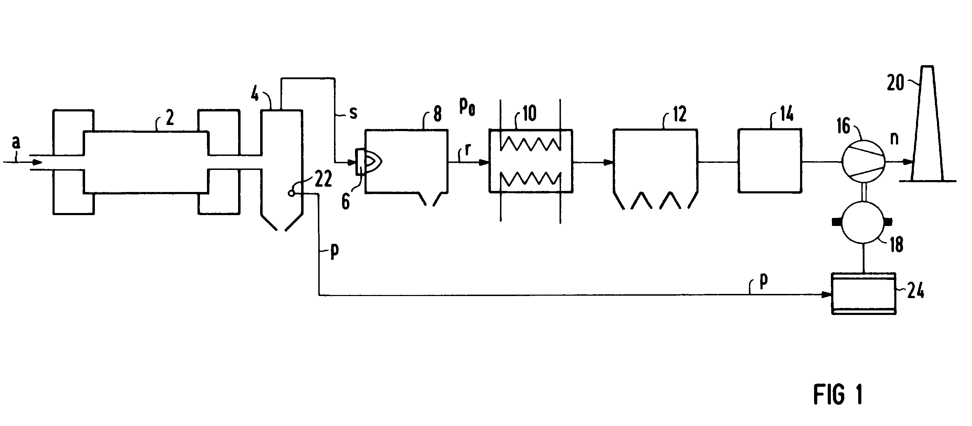

Nach Figur 1 umfaßt die Schwel-Brenn-Anlage eine Schwel- oder Pyrolysetrommel 2, der Abfall a zugeführt wird. Die Pyrolysetrommel 2 erzeugt Schwelgas s, das von ihrem Austrittsgehäuse 4 dem Brenner 6 einer Hochtemperatur-Brennkammer 8 mit Schlackeabzug zugeleitet wird. Das dort infolge Verbrennung entstehende Rauchgas r wird über eine Kühleinrichtung 10, vorliegend einen Abhitzekessel, einer Rauchgas-Reinigungseinrichtung 12 zugeleitet. Hierbei kann es sich insbesondere um eine nasse Rauchgasreinigungsanlage mit Staubfilteranlage handeln. Das gereinigte Rauchgas wird sodann in eine DeNOₓ-Einrichtung 14 gegeben, wo es weitgehend von Stickoxiden befreit wird. Zum Transport des Rauchgases r ist am Ausgang der DeNOₓ-Einrichtung 14 ein Gebläse oder Gasverdichter 16 vorgesehen, der von einem Elektromotor 18 angetrieben wird. Die Rauchgasleitung führt sodann zu einem Auslaß in Form eines Kamins 20.

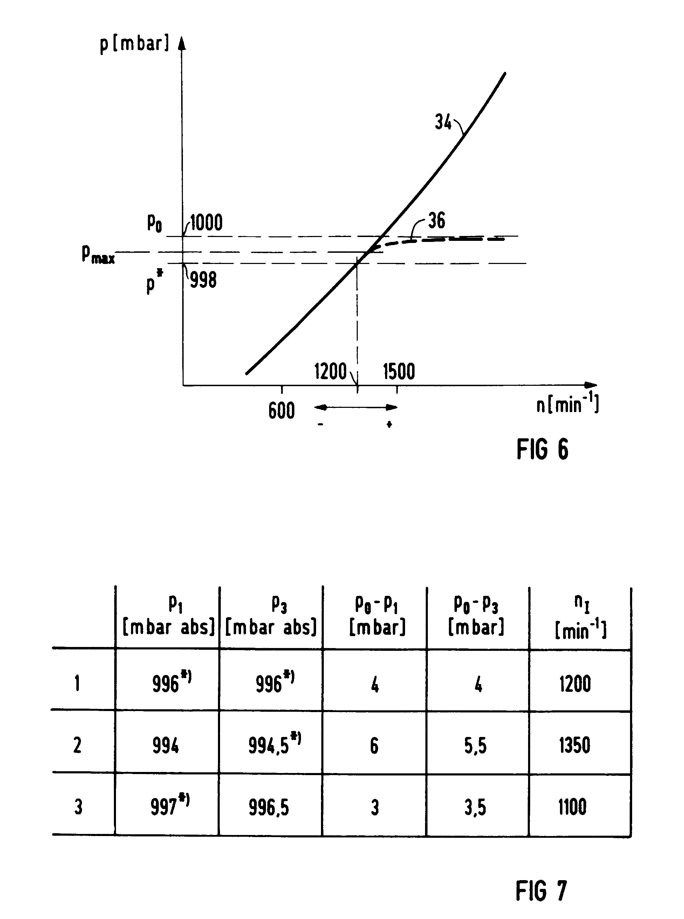

Von Bedeutung ist nun, daß mittels des Gasverdichters 16 der Druck p im Gasweg zwischen der Pyrolysetrommel 2 und dem Gasverdichter 16 beeinflußt wird. Diese Beeinflussung erfolgt in Form einer Steuerung nach einer vorgegebenen Kennlinie n = f(p), wie sie beispielsweise in Figur 6 dargestellt ist. Insbesondere wird so vorgegangen, daß die Drehzahl n des Gasverdichters 16 in Abhängigkeit vom Druck p im Gasweg zwischen der Pyrolysetrommel 2 und dem Gasverdichter 16 so geführt ist, daß bei einer Verringerung des Druckes p die Drehzahl n verringert wird. Dazu wird der Druck p mit Hilfe eines Drucksensors oder Druckmessers 22 in der Pyrolysetrommel 2 gemessen, bevorzugt in deren Austrittsgehäuse 4. Der Druck-Meßwert p wird einer Steuereinrichtung 24 zugeleitet, die zur Ansteuerung des Elektromotors 18 als Stellglied vorgesehen ist. In der Steuereinrichtung 24 sind Mittel vorhanden, beispielsweise ein Speicher, der die vorgegebene Relation n = f(p) speichert. Diese Art der Führung der Drehzahl n ist bei einem Druck p in dem besagten Gasweg vorgesehen, der niedriger ist als der Druck pₒ in der Umgebung. Nähert sich der Druck p diesem Umgebungsdruck pₒ, so kann diese Art der Drehzahlführung durch eine andere Führung oder eine Sicherheitsmaßnahme abgelöst werden.

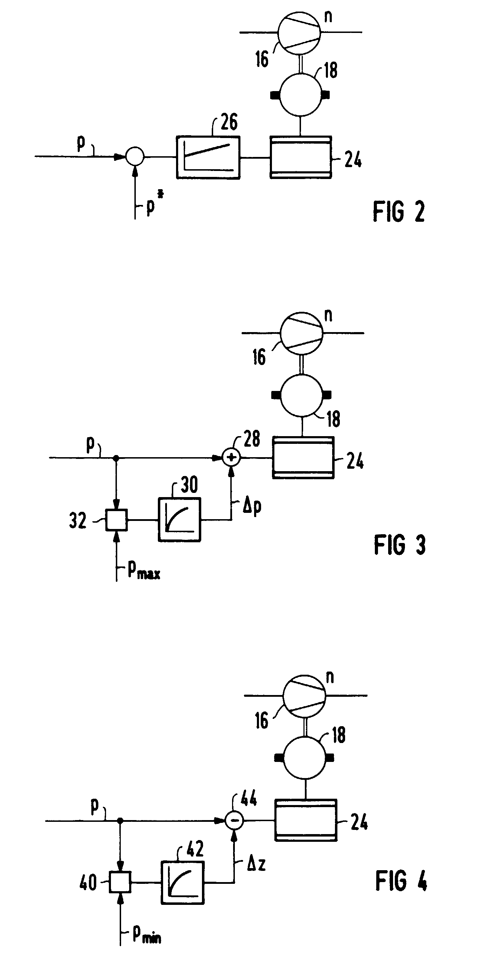

In Figur 2 ist gezeigt, daß die Drehzahlsteuerung zu einer Drehzahlregelung ausgebaut werden kann. Hierzu ist der Steuereinrichtung 24 ein Regler 26 vorgeschaltet, dem der Druck-Istwert p und ein Druck-Sollwert p* zum Zwecke des Vergleichs aufgeschaltet sind. Mit einer solchen Regelung kann der Druck p im besagten Gasweg auf dem vorgegebenen Sollwert p* gehalten werden, wobei dieser Sollwert p* niedriger ist als der Druck pₒ in der Umgebung.

In Figur 3 ist eine Variation der Schaltung von Figur 1 dargestellt, die sicherstellt, daß der Druck p im besagten Gasweg stets unterhalb eines maximalen Grenzwerts pₘₐₓ gehalten wird. Zu diesem Zweck ist eine Aufschaltung eines Korrekturwertes Δp vorgesehen, damit bei höherem Druck p die Drehzahl deutlich erhöht und damit stärker angesaugt wird. Hierzu werden der Istwert des Druckes p und das Zusatzsignal Δp einem Additionsglied 28 zugeleitet, das der Steuereinrichtung 24 zugeordnet ist. Der Korrekturwert oder das Zusatzsignal Δp wird einem Funktionsgenerator 30 entnommen, der einem Vergleicher 32 nachgeschaltet ist. Der Vergleicher 32 vergleicht den ermittelten Meßwert p für den Druck im Gasweg mit dem vorgegebenen Maximalwert pₘₐₓ; bei Überschreiten des Maximalwerts pₘₐₓ gibt er das Zusatzsignal Δp an die Steuereinrichtung 24 ab. Mit Hilfe des Funktionsgenerators 30 geschieht dies derart, daß die Drehzahl n des Gasverdichters 16 deutlich erhöht wird. Dies läuft darauf hinaus, daß durch die Aufschaltung in Figur 6 nicht der durchgezogene Kurvenverlauf 34, sondern der gestrichelte Kurvenverlauf 36 gilt.

In Figur 4 ist eine Ausführungsform gezeigt, bei der sichergestellt wird, daß bei Unterschreiten eines Minimalwerts Pₘᵢₙ des Druckes eine Notmaßnahme ergriffen wird dergestalt, daß die Drehzahl n des Gasverdichters 16 stark verringert oder gar ganz auf Null gesetzt wird, um einen Druckanstieg zu ermöglichen. Zu diesem Zweck ist hier ein Vergleichsglied 40 vorgesehen, das den ermittelten Meßwert p für den Druck im Gasweg mit dem vorgegebenen Minimalwert pₘᵢₙ vergleicht. Bei Unterschreiten des Minimalwerts pₘᵢₙ aktiviert es einen Funktionsgenerator 42, der ein zum Drucksignal p zusätzliches Eingangssignal Δz an ein Subtraktionsglied 44, das der Steuereinrichtung 24 zugeordnet ist, liefert. Dies geschieht derart, daß die Drehzahl n des Gasverdichters 16 - wie bereits erwähnt - deutlich verringert oder gar ganz auf Null gesetzt wird.

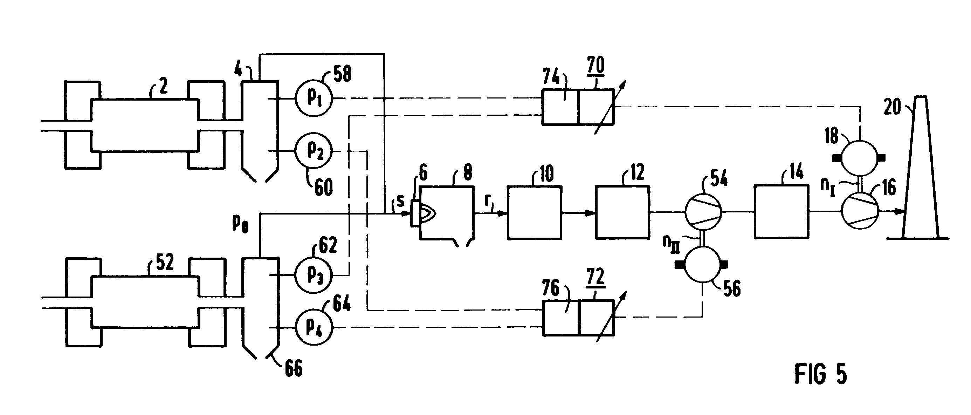

Bei der Schwel-Brenn-Anlage gemäß Figur 5 erkennt man zunächst das Prinzip der in Figur 1 gezeigten Schaltungsanordnung wieder. Zusätzlich zur Pyrolysetrommel 2 ist hier eine weitere Pyrolyse- oder Schweltrommel 52 vorgesehen, deren Schwelgasleitung ebenfalls an den Brenner 6 der Brennkammer 8 angeschlossen ist. Mit Hilfe dieser beiden Pyrolysetrommeln 2, 52 ist gewährleistet, daß eine große Menge an Abfall thermisch bearbeitet werden kann. Bemerkenswert gegenüber der Anordnung nach Figur 1 ist weiterhin, daß vorliegend zwischen der Rauchgas-Reinigungseinrichtung 12 und der DeNOₓ-Einrichtung 14 ein weiterer Gasverdichter 54 mit Antriebsmotor 56 angeordnet ist. Die beiden Gasverdichter 16, 54 sind also miteinander in Reihe geschaltet. Durch die Anordnung der beiden Gebläse oder Gasverdichter 16, 56 ist eine Redundanz sichergestellt. Denn wenn einer der beiden Gasverdichter 16, 54 ausfällt, ist sichergestellt, daß das Schwelgas s dennoch aus den beiden Pyrolysetrommeln 2, 52 herausgesaugt und in die Brennkammer 8 eingebracht wird. Ohne das Absaugen durch zumindest einen Gasverdichter 16, 54 würde das nicht verbrannte und weiter nachgelieferte Gas s in der Pyrolysetrommel 2, 52 einen Druckanstieg bewirken. Dadurch könnte eine Beschädigung in Form eines Lecks auftreten, und das Schwelgas s könnte unkontrolliert in nicht verbrannter Form in die Umgebung austreten, was unbedingt verhindert werden muß.

Zur Druckmessung sind in jeder der beiden Pyrolysetrommeln 2, 52 zwei Druckmesser 58, 60 bzw. 62, 64 vorgesehen. Die Druckmesser 58, 60 sind am Austrittsgehäuse 6 und die Druckmesser 62, 64 sind am Austrittsgehäuse 66 angeordnet. Sie könnten auch in der Schwelgasleitung angebracht sein.

Zur Steuerung der Drehzahl n_{I} des ersten Gebläses 16 und der Drehzahl n_{II} des zweiten Gebläses 54 sind zwei Steuereinrichtungen 70 bzw. 72 vorgesehen. Die Steuereinrichtung 70 ist eingangsseitig mit dem Druckmesser 58 an der Pyrolysetrommel 2 und mit dem Druckmesser 62 an der Pyrolysetrommel 52 verbunden. Entsprechend ist die weitere Steuereinrichtung 72 mit dem Druckmesser 60 an der ersten Pyrolysetrommel 2 und mit dem Druckmesser 64 an der weiteren Pyrolysetrommel 52 eingangsseitig verbunden. Jede der beiden Steuereinrichtungen 70, 72 enthält einen Diskriminator 74 bzw. 76, der den jeweils anstehenden höheren Druckwert zur Führung der betreffenden Drehzahl n_{I} bzw. n_{II} weiterleitet.

Die beiden Pyrolysetrommeln 2, 52 erzeugen im Betrieb Schwelgas s. Bei Störungen in der Anlage kann die Gasproduktion nun nicht spontan unterbrochen werden; es hat sich gezeigt, daß nach Abschaltung noch ca. 0,5 bis 1 Stunde unbeeinflußbar Schwelgas s erzeugt wird. Die beiden Gasverdichter 16, 54 saugen bei Normalbetrieb und auch bei Störfallbetrieb das Schwelgas s aus den Pyrolysetrommeln 2, 52, und zwar über die Brennkammer 8, die Kühleinrichtung 10 in Form des Abhitzekessels, die Rauchgas-Reinigungseinrichtung 12 und die DeNOₓ-Einrichtung 14, und fördern das entstandene Rauchgas r zum Kamin 20.

Im Normalfall laufen die beiden Gasverdichter 16, 56 mit gleicher Drehzahl n_{I} = n_{II}. Im ungestörten Betrieb zeigen die beiden Druckmesser 58, 60 denselben Druckwert p₁ = p₂ an. Ebenso zeigen die beiden Druckmesser 62, 64 denselben Druckwert p₃ = p₄ an. Der Betrieb ist auch hier wieder so ausgelegt, daß sich bei einer großen Gasproduktion und damit bei einem hohen Druck p₁ bis p₄ in den Pyrolysetrommeln 2, 52 eine hohe Drehzahl n_{I}, n_{II} einstellt, wohingegen bei einer geringen Gasproduktion eine kleine Drehzahl n_{I}, n_{II} eingestellt wird.

Die dargestellte Anlage ist unempfindlich insbesondere gegen eine denkbare Störung, die sich durch die Ausdrücke "geringe Gasproduktion" und "hohe Drehzahl" beschreiben läßt. Eine geringe Gasproduktion kann bei einer geringen Aufgabe von Abfall a eintreten, und eine zu hohe Drehzahl n_{I} oder n_{II} kann bei einer Störung in der Meßwertaufnahme, also in einem der Druckmesser 58 bis 64, oder bei einer Störung der Meßwertverarbeitung in einer der Steuereinrichtungen 70, 72 entstehen. Die Folge eines solchen Störfalls: Durch die hohe Drehzahl wird - ohne die hier getroffenen Gegenmaßnahmen - bei kleiner Gasmenge ein hoher Saug- oder Unterdruck auf dem Gasweg von den Pyrolysetrommeln 2, 52 zu den Gasverdichtern 16, 54 erzeugt. Die hier liegenden Komponenten, wie Rauchgas-Reinigungsbehälter 12, Elektrofilter, Abhitzekessel 10, sind nicht für diesen Unterdruck ausgelegt und können durch Implosion zerstört werden.

Die dargestellte Schaltungsanordnung ist also gegenüber Störungen dieser Art sicher, so daß kein Schwel- oder Rauchgas s, r nach außen dringen kann.

Diese Störsicherheit kommt folgendermaßen zustande: Führungsgröße für die Drehzahl n_{I}, n_{II} beider Gasverdichter 16, 54 ist der Druck p₁, p₃ bzw. p₂, p₄ im Reststoff- und Schwelgas-Austrittsgehäuse jeder Pyrolysetrommel 2, 52.

Um dies zu erreichen, ist - wie erwähnt - je ein Druckaufnehmer 58, 62 und 60, 64 für jedes Gebläse 14, 54 an beiden Pyrolysetrommeln 2, 52 angeordnet. In den beiden Steuereinrichtungen 70, 72 ist immer der höhere der beiden anliegenden Absolutdruckwerte Führungsgröße für die Einstellung der Drehzahl n_{I} bzw. n_{II}. Die Führung erfolgt zum Beispiel durch Regelung gemäß Figur 6, Kurve 34 oder 36. Bei Überdruck vom Sollwert p* (z. B. p* = 998 mbar) erfolgt dann also eine Drehzahlsteigerung, bis der Sollwert p* wieder erreicht ist. Bei Unterdruck gegenüber dem Sollwert p* dagegen erfolgt eine Drehzahlreduktion, bis der Sollwert p* wieder erreicht ist. Auch bei Stillstand einer Pyrolysetrommel 2, 52 werden beide Gebläse 16, 54 betrieben.

Nunmehr wird ein Störungsfall betrachtet. Es wird angenommen, daß der Druckmesser 58 oder die Steuereinrichtung 70 störungsbedingt ausfällt, und zwar in der Weise, daß der Gasverdichter 16 in die maximale Drehzahl fährt. Dann wird auf dem besagten Gasweg ein sehr geringer Druck p erzeugt. Das heißt, es entsteht ein starker Saug- oder Unterdruck. Die drei Druckmesser 60, 62 und 64 registrieren sofort den Druckabfall. Der Druckmesser 62 hat aber keinen Einfluß auf das gestörte Verhalten des Gasverdichters 16. Infolge des registrierten Druckabfalls steuert derjenige der beiden Druckmesser 60, 64, der den höheren Absolutdruck anzeigt, die Drehzahl n_{II} des zweiten Gasverdichters 54 nach unten. Dadurch wird weniger Gas gefördert, so daß der Druck p gehalten wird, wenn nicht gar ansteigt. Somit ist also gewährleistet, daß der Druck p in der Rauchgasleitung nicht einen zulässigen Minimaldruck unterschreitet.

Mit der gezeigten Steuerung der beiden Gasverdichter 16, 54 kann auch die gleiche Störung bei Stillstand, zum Beispiel bei einer Reparatur einer Pyrolysetrommel 2, 52, beherrscht werden.

Es läßt sich also feststellen, daß es mit der vorliegenden Technik nicht erforderlich ist, eine äußerst kostspielige Auslegung der Großkomponenten auf den niedrigsten Saugdruck der beiden Gasverdichter 16, 54 vorzunehmen.

In Figur 7 ist noch einmal anhand einer Tabelle gezeigt, in welcher Weise und beeinflußt durch welche Drücke die Drehzahl n_{I} des Gasverdichters 16 eingestellt wird. Es ist im Fall 1 davon ausgegangen, daß die beiden Drücke p₁ und p₃ gleich groß sind und zum Beispiel 996 Millibar betragen. Dies führt zu einer Drehzahl von zum Beispiel n_{I} = 1200 U/min. Im Fall 2 ist davon ausgegangen, daß beide Drücke p₁, p₃ gefallen sind. In diesem Fall bestimmt der größere Druck von zum Beispiel p₃ = 994,5 Millibar, der durch ein Sternchen gekennzeichnet ist, die Drehzahl von zum Beispiel n_{I} = 1350 U/min. Im Fall 3 schließlich sind beide Drücke p₁, p₃ gestiegen, wobei nunmehr der Druck p₁ mit zum Beispiel p₁ = 997 Millibar der größere ist. Diesmal bestimmt er die Drehzahl von zum Beispiel n_{I} = 1100 U/min, was ebenfalls durch ein Sternchen gekennzeichnet ist.

## Patentansprüche

1. Schwel-Brenn-Verfahren, bei dem das von einer Pyrolysetrommel (2,52) erzeugte Schwelgas (s) in den Brenner (6) einer Brennkammer (8) geleitet und das dort infolge Verbrennung entstehende Rauchgas (r) über eine Kühleinrichtung (10) und über einen Gasverdichter (16) einem Auslaß (20) zugeführt wird, wobei mittels des Gasverdichters (16) der Druck (p,p₁,p₂,p₃,p₄) im Gasweg zwischen der Pyrolysetrommel (2,52) und dem Gasverdichter (16) beeinflußt wird,
**dadurch gekennzeichnet**, daß bei einem Druck (p,p₁,p₃) im besagten Gasweg, der niedriger als der Druck (p₀) in der Umgebung ist, die Drehzahl (n_{I}) des Gasverdichters (16) in Abhängigkeit vom Druck (p,p₁,p₃) im Gasweg so geführt ist, daß bei einer Verringerung des Drukkes (p,p₁,p₃) die Drehzahl (n_{I}) verringert wird, wobei parallel, bevorzugt aber in Reihe zum Gasverdichter (16) ein weiterer Gasverdichter(54) angeordnet ist, und wobei die Drehzahl (n_{II}) des weiteren Gasverdichters (54) - unabhängig von der Drehzahl (n_{I}) des erstgenannten Gasverdichters (16) - in Abhängigkeit vom Druck (p,p₂,p₄) im besagten Gasweg so geführt ist, daß bei einer Verringerung des Drucks (p,p₂,p₄) die Drehzahl (n_{II}) verringert wird.

2. Schwel-Brenn-Verfahren nach Anspruch 1,
**dadurch gekennzeichnet**, daß die Drehzahl (n_{I},n_{II}) in Abhängigkeit vom Druck (p,p₁,p₂,p₃,p₄) nach einer vorgegebenen Relation (n_{I} = f(p), n_{II} = g(p)) geführt wird.

3. Schwel-Brenn-Verfahren nach Anspruch 1 oder 2,
**dadurch gekennzeichnet**, daß der Druck (p,p₁,p₂,p₃,p₄) im besagten Gasweg auf einem vorgegebenen Sollwert (p*) gehalten wird, der niedriger ist als der Druck (p₀) in der Umgebung.

4. Schwel-Brenn-Verfahren nach Anspruch 1, 2 oder 3,
**dadurch gekennzeichnet**, daß der Druck (p,p₁,p₂,p₃,p₄) im besagten Gasweg stets unterhalb des Druckes (p₀) in der Umgebung gehalten wird.

5. Schwel-Brenn-Verfahren nach einem der Ansprüche 1 bis 4,
**dadurch gekennzeichnet**, daß bei Erreichen eines vorgegebenen Maximalwerts (pₘₐₓ) des Drukkes (p,p₁,p₂,p₃,p₄) im besagten Gasweg die jeweilige Drehzahl (n_{I},n_{II}) der Gasverdichter (16,54) deutlich erhöht werden.

6. Schwel-Brenn-Verfahren nach einem der Ansprüche 1 bis 5,
**dadurch gekennzeichnet**, daß bei Erreichen eines vorgegebenen Minimalwerts (pₘᵢₙ) des Drucks (p,p₁,p₂,p₃,p₄) im besagten Gasweg die jeweilige Drehzahl (n_{I},n_{II}) der Gasverdichter (16,54) deutlich verringert oder auf Null gesetzt wird.

7. Schwel-Brenn-Verfahren nach einem der Ansprüche 1 bis 6,
**dadurch gekennzeichnet**, daß eine weitere Pyrolysetrommel (52) vorgesehen ist, und daß das von der weiteren Pyrolysetrommel (52) erzeugte Schwelgas (s) in den Brenner (6) der Brennkammer (8) gegeben wird.

8. Schwel-Brenn-Verfahren nach Anspruch 7,
**dadurch gekennzeichnet**, daß im besagten Gasweg ein weiterer Gasverdichter (54) angeordnet ist, und daß die Drehzahl (p_{I}) des Gasverdichters (16) und unabhängig davon die Drehzahl (p_{II}) des weiteren Gasverdichters (54) jeweils in Abhängigkeit von Druck (p₁;p₂) in der Pyrolysetrommel (2) und vom Druck (p₃;p₄) in der weiteren Pyrolysetrommel (52) geführt wird.

9. Schwel-Brenn-Verfahren nach Anspruch 8,
**dadurch gekennzeichnet**, daß zur Führung der Drehzahl (n_{I},n_{II}) jeweils der höhere der beiden Drücke (p₁,p₂;p₃,p₄) ausgewählt wird.

10. Schwel-Brenn-Anlage zur thermischen Abfallentsorgung, bei der das von einer Pyrolysetrommel (2,52) erzeugte Schwelgas (s) in den Brenner (6) einer Brennkammer (8) geleitet und das dort infolge Verbrennung entstehende Rauchgas (r) über eine Kühleinrichtung (10) und über einen Gasverdichter (16) einem Auslaß (20) zuführbar ist, wobei mittels des Gasverdichters(16) der Druck (p,p₁,p₂,p₃,p₄) im Gasweg zwischen der pyrolysetrommel (2,52) und dem Gasverdichter (16) gegenüber der Umgebung einstellbar ist,
**dadurch gekennzeichnet**, daß eine Steuereinrichtung (24,70) vorgesehen ist, die die Drehzahl (n_{I}) des Gasverdichters (16) in Abhängigkeit vom Druck (p,p₁,p₂) im besagten Gasweg so führt, daß bei einer Verringerung des Druckes (p,p₁,p₂) die Drehzahl (n_{I}) verringert wird, wobei im Gasweg - parallel, vorzugsweise aber in Reihe zum Gasverdichter (16) - ein weiterer Gasverdichter (54) angeordnet ist, und wobei eine weitere Steuereinrichtung (72) vorgesehen ist, die die Drehzahl (n_{II}) des weiteren Gasverdichters (54) - unabhängig von der Drehzahl (n_{I}) des erstgenannten Gasverdichters (16) - ebenfalls in Abhängigkeit vom Druck (p,p₃,p₄) im Gasweg so führt, daß bei einer Verringerung des Drukkes (p,p₃,p₄) die Drehzahl (n_{II}) des weiteren Gasverdichters (54) verringert wird.

11. Anlage nach Anspruch 10,
**dadurch gekennzeichnet**, daß die Steuereinrichtungen (24,70,72) jeweils Mittel umfassen, die eine vorgegebene Relation zwischen dem zugeführten Meßwert für den Druck (p,p₁,p₂,p₃,p₄) und der Stellgröße für die jeweilige Drehzahl (n_{I},n_{II}) sicherstellen.

12. Anlage nach Anspruch 10 oder 11,
**dadurch gekennzeichnet**, daß den Steuereinrichtungen (24,70,72) ein Regler (26) vorgeschaltet ist, dem neben einem ermittelten Meßwert (p,p₁,p₂,p₃,p₄) auch ein vorgegebener Sollwert (p*) für den Druck im Gasweg aufgeschaltet ist.

13. Anlage nach Anspruch 10 oder 11,
**dadurch gekennzeichnet**, daß ein Vergleicher (32) vorgesehen ist, der einen ermittelten Meßwert (p,p₁,p₂,p₃,p₄) für den Druck im Gasweg mit einem vorgegebenen Maximalwert (pₘₐₓ) vergleicht und der bei Überschreiten des Maximalwerts (pₘₐₓ) ein Zusatzsignal (Δp) an die Steuereinrichtung (70,72) liefert derart, daß die Drehzahl (n_{I},n_{II}) des jeweiligen Gasverdichters (16,54) deutlich erhöht wird.

14. Anlage nach Anspruch 10, 11 oder 13,
**dadurch gekennzeichnet**, daß ein Vergleichsglied (40) vorgesehen ist, das einen ermittelten Meßwert (p,p₁,p₂,p₃,p₄) für den Druck im Gasweg mit einem vorgegebenen Minimalwert (pₘᵢₙ) vergleicht und das bei Unterschreiten des Minimalwerts (pₘᵢₙ) ein zusätzliches Eingangssignal (Δz) an die Steuereinrichtung (70,72) liefert derart, daß die Drehzahl (n_{I},n_{II}) des jeweiligen Gasverdichters (16,54) deutlich verringert oder auf Null gesetzt wird.

15. Anlage nach einem der Ansprüche 10 bis 14,
**dadurch gekennzeichnet**, daß an den Brenner (6) der Brennkammer (8) eine weitere Pyrolysetrommel (52) angeschlossen ist.

16. Anlage nach Anspruch 15,
**dadurch gekennzeichnet**, daß zur Druckmessung in jeder der beiden Pyrolysetrommeln (2,52) mindestens ein Druckmesser (58 bis 64) vorgesehen ist, vorzugsweise an deren Austrittsgehäuse (6,66).

17. Anlage nach Anspruch 15 oder 16,
**dadurch gekennzeichnet**, daß die Steuereinrichtung (70) und die weitere Steuereinrichtung (72) jeweils eingangsseitig mit einem ersten und zweiten Druckmesser (58,62; 60,64) verbunden sind, wobei der erste Druckmesser (58, 60) den Druck (p₁,p₂) in der Pyrolysetrommel (2) und der zweite Druckmesser (62,64) den Druck (p₃,p₄) in der weiteren Pyrolysetrommel (52) mißt.

18. Anlage nach Anspruch 17,
**dadurch gekennzeichnet**, daß die Steuereinrichtung (70) und die weitere Steuereinrichtung (72) jeweiis einen Diskriminator (74,76) enthält, der den höheren Druckwert zur Führung der betreffenden Drehzahl (n_{I},n_{II}) weiterleitet.

19. Anlage nach einem der Ansprüche 10 bis 18,
**dadurch gekennzeichnet**, daß zwischen den Gasverdichter (16) und den weiteren Gasverdichter (56) eine Rauchgas-Reinigungsanlage (14), insbesondere ein DeNOₓ-Reiniger, geschaltet ist.

## Claims

1. Low-temperature carbonisation/combustion process wherein the low-temperature carbonisation gas (s) generated by a pyrolysis drum (2, 52) is conveyed into the burner (6) of a combustion chamber (8) and the flue gas (r) arising therein as a consequence of combustion is supplied via a cooling device (10) and via a gas compressor (16) to an outlet (20), the pressure (p, p₁, p₂, p₃, p₄) in the gas path between the pyrolysis drum (2, 52) and the gas compressor (16) being influenced by means of the gas compressor (16), characterised in that at a pressure (p, p₁, p₃) in said gas path that is lower than the pressure (pₒ) in the environment, the rotary speed (n_{I}) of the gas compressor (16) is controlled as a function of the pressure (p, p₁, p₃) in the gas path in such a manner that in the event of a reduction in pressure (p, p₁, p₃) the rotary speed (n_{I}) is reduced, whereby an additional gas compressor (54) is arranged parallel to but preferably in series with the gas compressor (16) and whereby the rotary speed (n_{II}) of the additional gas compressor (54) - independently of the rotary speed (n_{I}) of the first-mentioned gas compressor (16) - is controlled as a function of the pressure (p, p₂, p₄) in said gas path in such a manner that in the event of a reduction in pressure (p, p₂, p₄) the rotary speed (n_{II}) is reduced.

2. Low-temperature carbonisation/combustion process according to Claim 1,
characterised in that the rotary speed (n_{I}, n_{II}) is controlled as a function of the pressure (p, p₁, p₂, p₃, p₄) according to a predetermined relationship (n_{I} = f(p), n_{II} = g(p)).

3. Low-temperature carbonisation/combustion process according to Claim 1 or 2,
characterised in that the pressure (p, p₁, p₂, p₃, p₄) in said gas path is maintained at a predetermined nominal value (p*) that is lower than the pressure (pₒ) in the environment.

4. Low-temperature carbonisation/combustion process according to Claim 1, 2 or 3,
characterised in that the pressure (p, p₁, p₂, p₃, p₄) in said gas path is maintained at all times below the pressure (pₒ) in the environment.

5. Low-temperature carbonisation/combustion process according to one of Claims 1 to 4,
characterised in that when a predetermined maximum value (pₘₐₓ) of the pressure (p, p₁, p₂, p₃, p₄) in said gas path is attained the respective rotary speed (n_{I}, n_{II}) of the gas compressors (16, 54) is markedly increased.

6. Low-temperature carbonisation/combustion process according to one of Claims 1 to 5,
characterised in that when a predetermined minimum value p(ₘᵢₙ) of the pressure (p, p₁, p₂, p₃, p₄) in said gas path is attained the respective rotary speed (n_{I}, n_{II}) of the gas compressors (16, 54) is markedly reduced or is set to zero.

7. Low-temperature carbonisation/combustion process according to one of Claims 1 to 6,
characterised in that an additional pyrolysis drum (52) is provided and in that the low-temperature carbonisation gas (s) generated by the additional pyrolysis drum (52) is passed into the burner (6) of the combustion chamber (8).

8. Low-temperature carbonisation/combustion process according to Claim 7,
characterised in that an additional gas compressor (54) is arranged in said gas path and in that the rotary speed (p_{I}) (sic) of the gas compressor (16) and, independently of this, the rotary speed (p_{II}) (sic) of the additional gas compressor (54) are controlled respectively as a function of the pressure (p₁; p₂) in the pyrolysis drum (2) and as a function of the pressure (p₃; p₄) in the additional pyrolysis drum (52).

9. Low-temperature carbonisation/combustion process according to Claim 8,
characterised in that with a view to controlling the rotary speed (n_{I}, n_{II}) in each case the higher of the two pressures (p₁, p₂; p₃, p₄) is selected.

10. Low-temperature carbonisation/combustion plant for the thermal disposal of waste, wherein the low-temperature carbonisation gas (s) generated by a pyrolysis drum (2, 52) is conveyed into the burner (6) of a combustion chamber (8) and the flue gas (r) arising therein as a consequence of combustion is capable of being supplied via a cooling device (10) and via a gas compressor (16) to an outlet (20), the pressure (p, p₁, p₂, p₃, p₄) in the gas path between the pyrolysis drum (2, 52) and the gas compressor (16) being capable of being set in relation to the environment by means of the gas compressor (16),
characterised in that a control device (24, 70) is provided which controls the rotary speed (n_{I}) of the gas compressor (16) as a function of the pressure (p, p₁, p₂) in said gas path in such a manner that in the event of a reduction in pressure (p, p₁, p₂) the rotary speed (n_{I}) is reduced, whereby an additional gas compressor (54) is arranged - parallel to but preferably in series with the gas compressor (16) - in the gas path and whereby an additional control device (72) is provided which controls the rotary speed (n_{II}) of the additional gas compressor (54) - independently of the rotary speed (n_{I}) of the first-mentioned gas compressor (16) - likewise as a function of the pressure (p, p₃, p₄) in the gas path in such a manner that in the event of a reduction in pressure (p, p₃, p₄) the rotary speed (n_{II}) of the additional gas compressor (54) is reduced.

11. Plant according to Claim 10,
characterised in that the control devices (24, 70, 72) each comprise means that ensure a predetermined relationship between the supplied measured value of the pressure (p, p₁, p₂, p₃, p₄) and the control variable for the respective rotary speed (n_{I}, n_{II}).

12. Plant according to Claim 10 or 11,
characterised in that a regulator (26) is connected upstream of the control devices (24, 70, 72), to which regulator, in addition to the ascertained measured value (p, p₁, p₂, p₃, p₄), a predetermined nominal value (p*) of the pressure in the gas path is also switched.

13. Plant according to Claim 10 or 11,
characterised in that a comparator (32) is provided which compares an ascertained measured value (p, p₁, p₂, p₃, p₄) of the pressure in the gas path with a predetermined maximum value (pₘₐₓ) and which in the event of the maximum value (pₘₐₓ) being exceeded supplies a supplementary signal (Δp) to the control device (70, 72) such that the rotary speed (n_{I}, n_{II}) of the respective gas compressor (16, 54) is markedly increased.

14. Plant according to Claim 10, 11 or 13,
characterised in that a comparison element (40) is provided which compares an ascertained measured value (p, p₁, p₂, p₃, p₄) of the pressure in the gas path with a predetermined minimum value (pₘᵢₙ) and which, when the pressure falls below the minimum value (pₘᵢₙ), supplies an additional input signal (Δz) to the control device (70, 72) such that the rotary speed (n_{I}, n_{II}) of the respective gas compressor (16, 54) is markedly reduced or is set to zero.

15. Plant according to one of Claims 10 to 14,
characterised in that an additional pyrolysis drum (52) is connected to the burner (6) of the combustion chamber (8).

16. Plant according to Claim 15,
characterised in that with a view to pressure measurement at least one pressure gauge (58 to 64) is provided in each of the two pyrolysis drums (2, 52), preferably on the exhaust casing (6, 66) thereof.

17. Plant according to Claim 15 or 16,
characterised in that the control device (70) and the additional control device (72) are each connected on the input side to a first and a second pressure gauge (58, 62; 60, 64), the first pressure gauge (58, 60) measuring the pressure (p₁, p₂) in the pyrolysis drum (2) and the second pressure gauge (62, 64) measuring the pressure (p₃, p₄) in the additional pyrolysis drum (52).

18. Plant according to Claim 17,
characterised in that the control device (70) and the additional control device (72) each include a discriminator (74, 76) which passes on the higher pressure value with a view to controlling the rotary speed (n_{I}, n_{II}) in question.

19. Plant according to one of Claims 10 to 18,
characterised in that a flue-gas purification system (14), in particular a deNOₓ purifier, is interpolated between the gas compressor (16) and the additional gas compressor (56).

## Revendications

1. Procédé de carbonisation-combustion, dans lequel le gaz de carbonisation (s) produit dans un tambour de pyrolyse (2, 52) est envoyé dans le brûleur (6) d'une chambre de combustion (8), et les fumées (r) qui s'y forment en conséquence de la combustion sont, par l'intermédiaire d'un dispositif de refroidissement (10) et d'un compresseur de gaz (16), envoyées à une sortie (20), le compresseur de gaz (16) agissant sur la pression (p,p₁,p₂,p₃,p₄) dans le trajet des gaz entre le tambour de pyrolyse (2, 52) et le compresseur de gaz (16), caractérisé en ce que, pour une pression (p,p₁,p₃) dans le trajet des gaz mentionné ci-dessus, qui est inférieure à la pression ambiante (pₒ), la vitesse de rotation (n_{*I*}) du compresseur de gaz (16) est pilotée, en fonction de la pression (p,p₁,p₃) dans le trajet des gaz, de telle sorte que la vitesse de rotation (n_{*I*}) diminue quand diminue la pression (p,p₁,p₃), un autre compresseur de gaz (54) étant disposé en parallèle, mais de préférence en série avec le compresseur de gaz (16), et la vitesse de rotation (n_{II}) de l'autre compresseur de gaz (54) étant, indépendamment de la vitesse de rotation (n_{*I*}) du premier compresseur de gaz (16) mentionné ci-dessus, pilotée en fonction de la pression (p,p₂,p₄) dans le trajet des gaz mentionné ci-dessus, de telle sorte que la vitesse de rotation (n_{II}) diminue quand diminue la pression (p,p₂,p₄).

2. Procédé de carbonisation-combustion selon la revendication 1, caractérisé en ce que la vitesse de rotation (n_{*I*},n_{II}) est pilotée en fonction de la pression (p,p₁,p₂,p₃,p₄) selon une relation prédéfinie (n_{*I*} = f(p), n_{II} = g(p)).

3. Procédé de carbonisation-combustion selon la revendication 1 ou 2, caractérisé en ce que la pression (p,p₁,p₂,p_{3,}p₄) dans le trajet des gaz mentionné ci-dessus est maintenu à une valeur prescrite (p*) prédéfinie, qui est inférieure à la pression ambiante (pₒ).

4. Procédé de carbonisation-combustion selon la revendication 1, 2 ou 3, caractérisé en ce que la pression (p,p₁,p₂,p₃,p₄) dans le trajet des gaz mentionné ci-dessus est toujours maintenue en-dessous de la pression ambiante (pₒ).

5. Procédé de carbonisation-combustion selon l'une des revendications 1 à 4, caractérisé en ce que, quand la pression (p,p₁,p₂,p₃,p₄) dans le trajet des gaz mentionné ci-dessus atteint une valeur maximale prédéfinie (pₘₐₓ), la vitesse de rotation (n_{*I*},n_{II}) du compresseur de gaz correspondant (16, 54) subit une nette augmentation.

6. Procédé de carbonisation-combustion selon l'une des revendications 1 à 5, caractérisé en ce que, quand la pression (p,p₁,p₂,p₃,p₄) dans le trajet des gaz mentionné ci-dessus atteint une valeur minimale prédéfinie (pₘᵢₙ), la vitesse de rotation (n_{*I*},n_{II}) du compresseur de gaz correspondant (16, 54) subit une nette diminution ou s'annule.

7. Procédé de carbonisation-combustion selon l'une des revendications 1 à 6, caractérisé en ce qu'on prévoit un tambour de pyrolyse supplémentaire (52), et en ce que le gaz de carbonisation (s) produit par le tambour de pyrolyse supplémentaire (52) est envoyé dans le brûleur (6) de la chambre de combustion (8).

8. Procédé de carbonisation-combustion selon la revendication 7, caractérisé en ce qu'un autre compresseur de gaz (54) est disposé dans le trajet des gaz, et que la vitesse de rotation (p₁) du compresseur de gaz (16) et, indépendamment de cette dernière, la vitesse de rotation (p₂) de l'autre compresseur de gaz (54), sont chacune pilotées en fonction de la pression (p₁;p₂) régnant dans le tambour de pyrolyse (2) et de la pression (p₃,p₄) régnant dans le tambour de pyrolyse supplémentaire (52).

9. Procédé de carbonisation-combustion selon la revendication 8, caractérisé en ce que, pour piloter la vitesse de rotation (n_{I},n_{II}), on choisit dans chaque cas la plus grande des deux pressions (p,p₂,p₃,p₄).

10. Installation de carbonisation-combustion pour l'élimination thermique des déchets, dans laquelle le gaz de carbonisation (s) produit par un tambour de pyrolyse (2, 52) est envoyé dans le brûleur (6) d'une chambre de combustion (8), et les fumées (r) qui s'y forment en conséquence de la combustion peuvent, en passant par un dispositif de refroidissement (10) et par un compresseur de gaz (16), être envoyées à une sortie (20), le compresseur de gaz (16) pouvant ajuster la pression (p,p₁,p₂,p₃,p₄) dans le trajet des gaz entre le tambour de pyrolyse (2, 52) et le compresseur de gaz (16) par rapport à la pression ambiante, caractérisée en ce qu'il est prévu un dispositif de commande (24, 70), qui pilote la vitesse de rotation (n_{*I*}) du compresseur de gaz (16) en fonction de la pression (p,p₁,p₂) dans le trajet des gaz, de telle sorte que la vitesse de rotation (n_{*I*}) diminue quand diminue la pression (p,p₁,p₂), un autre compresseur de gaz (54) étant disposé dans le trajet des gaz, en parallèle mais de préférence en série avec le compresseur de gaz (16), et il est prévu un autre dispositif de commande (72), qui, indépendamment de la vitesse de rotation (n_{*I*}) du premier compresseur de gaz (16) mentionné ci-dessus, pilote lui aussi la vitesse de rotation (n_{II}) de l'autre compresseur de gaz (54) en fonction de la pression (p,p₃,p₄) régnant dans le trajet des gaz, de telle sorte que la vitesse de rotation (n_{II}) de l'autre compresseur de gaz (54) diminue quand diminue la pression (p,p₃,p₄).

11. Installation selon la revendication 10, caractérisée en ce que chacun des dispositifs de commande (24, 70, 72) englobe des moyens qui garantissent une relation prédéfinie entre la valeur de mesure amenée de la pression (p,p₁,p₂,p₃,p₄) et la grandeur de commande de la vitesse de rotation (n_{*I*},n_{II}) correspondante.

12. Installation selon la revendication 10 ou 11, caractérisée en ce qu'il est monté en amont des dispositifs de commande (24, 70, 72) un régulateur (26) auquel on envoie non seulement une valeur de mesure déterminée ((p,p₁,p₂,p₃,p₄), mais aussi une valeur prescrite (p*) prédéfinie de la pression dans le trajet des gaz.

13. Installation selon la revendication 10 ou 11, caractérisée en ce qu'on prévoit un comparateur (32) qui compare une valeur de mesure déterminée (p,p_{1,}p₂,p₃,p₄) de la pression dans le trajet des gaz à une valeur maximale prédéfinie (pₘₐₓ), et qui, quand la pression dépasse la pression maximale (pₘₐₓ), envoie un signal additionnel (Δp) au dispositif de commande (70, 72) de telle sorte que la vitesse de rotation (n_{*I*},n_{II}) du compresseur de gaz (16, 54) correspondant subisse une nette augmentation.

14. Installation selon la revendication 10, 11 ou 13, caractérisée en ce qu'on prévoit un comparateur (40), qui compare une valeur de mesure déterminée (p,p₁,p₂,p₃,p₄) de la pression dans le trajet des gaz à une valeur minimale prédéfinie (pₘᵢₙ), et qui, quand la pression passe en-dessous de la valeur minimale (pₘᵢₙ), envoie un signal d'entrée additionnelle (Δz) à l'unité de commande (70, 72) de façon que la vitesse de rotation (n_{*I*},n_{II}) du compresseur de gaz (16, 54) correspondant subisse une nette diminution ou s'annule.

15. Installation selon l'une des revendications 10 à 14, caractérisée en ce qu'un tambour de pyrolyse supplémentaire (52) est raccordé au brûleur (6) de la chambre de combustion (8).

16. Installation selon la revendication 15, caractérisée en ce que. pour mesurer la pression dans chacun des deux tambours de pyrolyse (2, 52), il est prévu au moins un manomètre (58 à 64), de préférence au niveau de sa boîte de sortie (6, 66).

17. Installation selon la revendication 15 ou 16, caractérisée en ce que le dispositif de commande (70) et l'autre dispositif de commande (72) sont chacun reliés côté entrée à un premier et à un deuxième manomètres (58, 62 ; 60, 64), le premier manomètre (58, 60) mesurant la pression (p₁,p₂) dans le tambour de pyrolyse (2) et le deuxième manomètre (62, 64) mesurant la pression (p₃,p₄) dans le tambour de pyrolyse supplémentaire (52).

18. Installation selon la revendication 17, caractérisée en ce que le dispositif de commande (70) et l'autre dispositif de commande (72) contiennent chacun un discriminateur (74, 76), qui transmet la valeur de pression la plus grande pour piloter la vitesse de rotation correspondante (n_{*I*},n_{II}).

19. Installation selon l'une des revendications 10 à 18, caractérisée en ce qu'entre le compresseur de gaz (16) et l'autre compresseur de gaz (56) est disposée une installation (14) d'épuration des fumées, en particulier une installation d'élimination des oxydes d'azote DeNOₓ.
